# EUROPEAN PATENT SPECIFICATION

(11) **EP 3 367 183 B1**
(45) Date of publication and mention of the grant of the patent: **02.12.2020**
(21) Application number: 17157370.2
(22) Date of filing: 22.02.2017
(51) Int. Cl.: G05B 15/02

(54) **A METHOD FOR REMOTELY CONTROLLING AN AIR PURIFICATION DEVICE**
VERFAHREN ZUR FERNSTEUERUNG EINER LUFTREINIGUNGSVORRICHTUNG
PROCÉDÉ DE COMMANDE À DISTANCE D'UN DISPOSITIF DE PURIFICATION D'AIR

(43) Date of publication of application: 29.08.2018
(73) Proprietor: Taurus Research and Development, SLU, 25790 Oliana (Lleida) (ES)
(72) Inventor: TRENCH ROCA, Lluís, 08650 Sallent (ES)
(74) Representative: Juncosa Miró, Jaime

(56) References cited:
- EP-A2- 3 001 115
- WO-A1-2016/097385
- WO-A1-2017/005531
- US-A1- 2014 262 130
- US-A1- 2015 323 209
- US-A1- 2016 184 755

## Description

### Technical Field

The present invention relates to a method for remotely controlling an air purification device, based on geolocalization information, i.e. the identification or estimation of the real-world geographic location of an object.

### Background of the Invention

From patent documents WO-A1-2016150368, CN-A-105607503, CN-A-106227134 and EP-A2-3001115, air purification devices are known which can be remotely controlled.

WO-A1-2016150368 discloses an air purification system, comprising at least two air purification apparatuses, at least one total intelligent control apparatus and at least one air quality sensor. The air quality sensor senses the air quality of an environment, and inputs air quality data into the total intelligent control apparatus. The total intelligent control apparatus from the received air quality data controls operating modes of the at least two air purification apparatuses by outputting an operating instruction to the at least two air purification apparatuses, such that the at least two air purification apparatuses cooperatively operate.

CN-A-105607503 discloses an air purification cloud household system comprising a cloud server, an air purifier, an intelligent terminal such as a handset and a household electric appliance equipment system. The air purification device is controlled by the intelligent terminal which receives pollution data directly from the cloud server.

CN-A-106227134 discloses and indoor content PM2.5 monitoring and controlling system comprising a laser dust sensor for real-time collecting indoor PM2.5 concentration content, a cloud computer server to receive said collected concentration content and an air purifying device connected to the cloud computer server to receive control information from the latter.

EP-A2-3001115 provides a method and a device for controlling an apparatus. The method includes: receiving from a home control device a notification message including an information item including address information on the home control device; receiving target object quality data from a home apparatus, the target object quality data being obtained by performing a quality measurement on the target object by the home apparatus, the home apparatus including a home apparatus bound to the home control device, or a home apparatus located in a specified region where the home control device is; sending apparatus control prompt information to the home control device according to the address information on the home control device when the target object quality data is less than a threshold, the apparatus control prompt information being configured to prompt a user of the home control device to start the home apparatus belonging to the user.

Some of the current state of the art proposals, therefore, teach or suggest a remote control operation of an air purification device via a cloud computer server operated on pollution data based on geolocalization information of the air purification device. However, none of the current solutions teach that the cloud computer server can suggest replacement of the filters of the air purification device considering the working conditions and working time of the purification device.

### Description of the invention

To that end, embodiments of the present invention provide a method for remotely controlling an air purification device, the method comprising setting, via a software application installed in a user terminal such as a smartphone or a tablet, among others, initial configuration parameters of an air purification device comprising at least one filter element and a communication module connectable to a cloud computer server to remotely control operation of said air purification device.

To that end, it is known that, said remotely control operation involves performing by said cloud computer server the following steps: receiving information about geolocalization of said purification device; determining a pollution parameter concerning said geolocalization by correlating said received information with a register containing pollution data about different locations; comparing said pollution parameter with a given threshold; and outputting a first operation instruction for said air purification device depending on a result of said comparison transmitted to the communication module of the air purification device via a communications network.

Unlike the solutions previously known in the state of the art, in the present application the cloud computer server further receives, either from the communication module of the air purification device or from the software application, a record of the operating hours of the air purification device. In this case, the cloud computer server can use said record and historical data about a particular location of the air purification device to determine/compute a filtering efficiency parameter. Then, depending on the result of said determining/computing the cloud computer server can output a second operation instruction for the air purification device comprising an indication that said at least one filter element has to be replaced.

Besides, this indication can be displayed on a display of the air purification device or alternatively on a display of the user terminal

According to an embodiment, for the particular case that the air purification device is off, when the pollution parameter is equal or above the given threshold, said first operation instruction comprises a power-on command to switch on the air purification device. Alternatively, for the case that the air purification device is on, when the pollution parameter is below the given threshold, said first operation instruction comprises a power-off command to switch off the air purification device.

According to the invention, said pollution parameter can be automatically determined by the cloud computer server every certain period of time may, for instance every hour, every several hours, or even daily, or alternatively it can be determined upon request of the air purification device or the software application.

According to an embodiment, the information received by the cloud computer server is sent by the communication module of the air purification device by establishing a wireless connection via said communication network, and includes an IP address of the air purification device. Alternatively, according to another embodiment, the information received by the cloud computer server is sent by the software application by establishing a wireless connection via the communications network, and includes an IP address of the user terminal being adjacent to the air purification device. According to yet another embodiment, the information received by the cloud computer server is sent by the software application by establishing a wireless connection via the communications network, and the user using the software application to manually indicate data regarding the IP address of the user terminal in the cloud computer server.

Preferably said setting of the initial configuration parameters is performed via a Bluetooth communication established between the user terminal and the communication module of the air purification device.

### Brief description of the drawings

The above and other advantages and characteristics will be more fully understood from the following detailed description of embodiments with reference to the attached drawings, which must be taken by way of illustration, not limitation, wherein:
Fig. 1 schematically shows a system architecture used for implementing the proposed method for remotely controlling an air purification device.
Fig. 2 is a flow chart diagram illustrating an embodiment of the proposed method.

### Detailed description of some embodiments

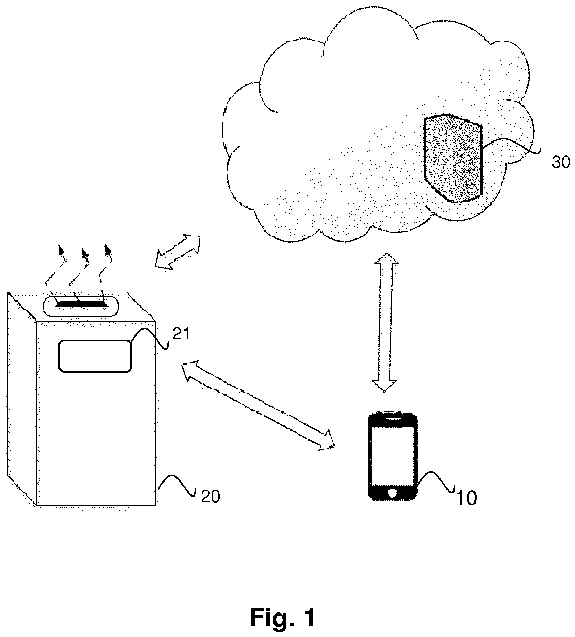

Fig. 1 illustrates an exemplary embodiment of a system with the different elements for implementing the proposed method for remotely controlling an air purification device. The system of Fig. 1 comprises a user terminal 10, the air purification device 20 which has to be remotely controlled and a cloud computer server 30 (i.e. a computer server located in a cloud computing infrastructure, or part thereof, or a plurality of computing entities cooperating with one another) to perform said remote control. The three different elements are configured to communicate with each other, preferably via wireless communication via a communication network, preferably a wide area network; however other types are also possible, such as a medium area network, or combinations of different types or network.

The user terminal 10 such as a Smartphone or a Tablet, among many other user computing devices, has installed therein a software application (not illustrated in the figure) to interact with the air purification device 20 and also with the cloud computer server 30. The air purification device 20 has a communication module (it could include more than one) to allow communication with the other elements of the system and one or more filter elements. The air purification device 20 of present invention does not include any sensor for monitoring/measuring air quality. Preferably, the air purification device 20 also includes a display 21. The cloud computer server 30 is configured to get or to access, either actively or passively, real-time pollution data such as an air quality index about different worldwide locations from a remote site or web page (not shown in the figure), for example from the *www.aqicn.org* or *www.bsc.es*/*caliope*/*es* sites.

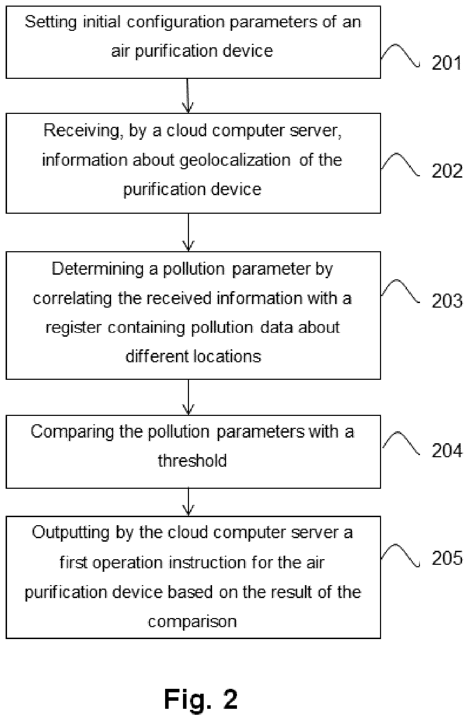

With reference to Fig. 2, therein it is illustrated an aspect of the proposed method. The air purification device 20, at step 201, is initially configured with initial configuration parameters (e.g. geographical location, Wi-Fi parameters, etc.). This is done by the cited software application installed in the user terminal 10, for example, via Bluetooth connection or via infrared connection. Then, at step 202, the cloud computer server 30 receives information about geolocalization of the purification device 20. After that, at step 203, the cloud computer server 30 determines, either automatically for instance every hour or every day or upon request of the air purification device 20 or of the software application, a pollution parameter concerning said geolocalization by correlating the received information with the cited real-time pollution data from said remote site or web page. The pollution parameter is compared, at step 204, with a given threshold and based on the result of this comparison, step 205, the cloud computer server 30 finally outputs a first operation instruction for the air purification device 20.

According to this aspect, the air purification device 20 is off (stopped), so when the pollution parameter determined by the cloud computer server 30 is equal or above the given threshold, the first operation instruction comprises a power-on command to automatically switch on the air purification device. According to another aspect, the air purification device 20 is on (working, i.e. purifying the air), so when the pollution parameter is below the given threshold, the first operation instruction comprises a power-off command to automatically switch off the air purification device 20.

The display 21 can show, among other type of information, the state of the pollution data determined by the cloud computer server 30.

The cloud computer server 30 can receive the geolocalization information of the air purification device 20 either from the air purification device 20 itself or from the software application. For instance, according to an embodiment, the communication module of the air purification device 20 comprises an IP address, which is sent to the cloud computer server 30 by the communication module of the air purification device 20. Alternatively, according to another embodiment, the information includes an IP address of the user terminal 10 which is located adjacent or in proximity of the air purification device 20. The IP address of the user terminal 10 is sent by the software application to the cloud computer server 30 via the communications network.

Besides receiving the geolocation information of the air purification device 20, the cloud computer server, according to the present invention, also receives, either from the communication module of the air purification device 20 or from the software application, a record of the operating hours of the air purification device 20 (i.e. the device performance). Therefore, the cloud computer server 30 can use said received record together with historical data about the particular location of the air purification device 20, acquired from said remote site or web page, to determine/compute a filtering efficiency parameter. Depending on the result of said determining/computing the cloud computer server 30 can output a second operation instruction for the air purification device 20 comprising an indication that one or more of said filter elements has to be replaced. This indication can be displayed on the display 21 of the air purification device 20 or alternatively on a display of the user terminal 10.

According to another embodiment, the cloud computer server 30 is further configured to control remote operation of a plurality of different air purification devices 20 (not illustrated here). In this case, each air purification device 20 can be configured to request information and forecast of pollution data with a certain time lag to the computer server 30, so the requests won't arrive at the cloud computer server 30 at the very same time. The requests could be performed even when the air purification devices 20 are in stand-by mode (energy saving).

The scope of the present invention is defined in the following attached claims.

## Claims

1. A method for remotely controlling an air purification device, the method comprising:
- setting, via a software application installed in a user terminal (10), initial configuration parameters of an air purification device (20) comprising at least one filter element and a communication module connectable to a cloud computer server (30) to remotely control operation of said air purification device (20);
- receiving, by the cloud computer server (30), information about geolocalization of said purification device (20);
- determining, by the cloud computer server (30), a pollution parameter concerning said geolocalization by correlating said received information with a register containing pollution data about different locations;
- comparing, by the cloud computer server (30), said pollution parameter with a given threshold; and
- outputting, by the cloud computer server (30), a first operation instruction for said air purification device (20) depending on a result of said comparison transmitted to the communication module via a communications network,
**characterized in that** the method further comprises:
- receiving, by the cloud computer server (30), either from the communication module or from the software application, a record of the operating hours of the air purification device (20);
- determining, by the cloud computer server (30), a filtering efficiency parameter based on the received record of the operating hours of the air purification device (20) and historical data about the particular location of the air purification device (20); and
- outputting, by the cloud computer server (30), depending on a result of said determining, a second operation instruction for the air purification device (20) by establishing a wireless connection with said communication module, said second operation instruction comprising an indication that said at least one filter element has to be replaced.

2. The method of claim 1, wherein the air purification device (20) being off, the pollution parameter being equal or above the given threshold, and said first operation instruction comprising a power-on command to switch on the air purification device (20).

3. The method of claim 1, wherein the air purification device (20) being on, the pollution parameter being below the given threshold, and said first operation instruction comprising a power-off command to switch off the air purification device (20).

4. The method of previous claims, wherein said pollution parameter being automatically determined by the cloud computer server every certain period of time.

5. The method of previous claims 1 to 3, comprising determining the cloud computer server the pollution parameter upon request of the air purification device (20) or of the software application.

6. The method of previous claims, wherein said information received by the cloud computer server (30) is sent by the communication module of the air purification device (20) by establishing a wireless connection via said communication network, and including an IP address of the air purification device (20).

7. The method of previous claims 1 to 5, wherein said information received by the cloud computer server (30) is sent by the software application by establishing a wireless connection via the communications network, and including an IP address of the user terminal (10) being adjacent to the air purification device (20).

8. The method of claim 1, further comprising displaying said indication on a display of the air purification device (20).

9. The method of claim 1, further comprising communicating, by the communication module, said indication to the software application and further displaying the indication on a display of the user terminal (10).

10. The method of claim 1, wherein said setting being performed via a Bluetooth communication established between the user terminal (10) and the communication module of the air purification device (20).

## Patentansprüche

1. Verfahren zur Fernsteuerung einer Luftreinigungsvorrichtung, wobei das Verfahren umfasst:
- Einstellen mittels einer in einem Benutzerterminal (10) installierten Softwareanwendung von Anfangskonfigurationsparametern einer Luftreinigungsvorrichtung (20) umfassend mindestens ein Filterelement und ein mit einem Cloud-Computerserver (30) verbindbares Kommunikationsmodul zur Fernsteuerung des Betriebs der genannten Luftreinigungsvorrichtung (20);
- Empfangen von Informationen über die Geolokalisierung der genannten Luftreinigungsvorrichtung (20) durch den Cloud-Computerserver (30);
- Bestimmen eines Verschmutzungsparameters, durch den Cloud-Computerserver (30), im Zusammenhang mit der genannten Geolokalisierung durch Korrelieren der genannten empfangenen Informationen mit einem Register, das Verschmutzungsdaten verschiedener Standorte enthält;
- Vergleichen des genannten Verschmutzungsparameters mit einem gegebenen Schwellenwert durch den Cloud-Computerserver (30); und
- Ausgeben einer ersten Betriebsanweisung an die genannte Luftreinigungsvorrichtung (20) durch den Cloud-Computerserver (30) in Abhängigkeit von dem über ein Kommunikationsnetz an das Kommunikationsmodul übertragenen Ergebnis des genannten Vergleichs,
**dadurch gekennzeichnet, dass** das Verfahren ferner umfasst:
- Empfangen einer Aufzeichnung der Betriebsstunden der Luftreinigungsvorrichtung (20) durch den Cloud-Computerserver (30), entweder vom Kommunikationsmodul oder von der Softwareanwendung;
- Bestimmen eines Filtereffizienzparameters durch den Cloud-Computerserver (30) auf der Grundlage der empfangenen Aufzeichnung der Betriebsstunden der Luftreinigungsvorrichtung (20) und der Verlaufsdaten über den jeweiligen Standort der Luftreinigungsvorrichtung (20); und
- Ausgeben einer zweiten Betriebsanweisung an die Luftreinigungsvorrichtung (20) durch den Cloud-Computerserver (30) in Abhängigkeit von dem Ergebnis der genannten Bestimmung, durch Aufbau einer Drahtlosverbindung mit dem genannten Kommunikationsmodul, wobei die genannte zweite Betriebsanweisung eine Angabe darüber umfasst, dass das genannte mindestens ein Filterelement ausgetauscht werden muss.

2. Verfahren nach Anspruch 1, wobei der Verschmutzungsparameter bei ausgeschalteter Luftreinigungsvorrichtung (20) gleich dem gegebenen Schwellenwert oder höher ist und die genannte erste Betriebsanweisung einen Einschaltbefehl zum Einschalten der Luftreinigungsvorrichtung (20) enthält.

3. Verfahren nach Anspruch 1, wobei der Verschmutzungsparameter bei eingeschalteter Luftreinigungsvorrichtung (20) unter dem gegebenen Schwellenwert liegt und die genannte erste Betriebsanweisung einen Ausschaltbefehl zum Ausschalten der Luftreinigungsvorrichtung (20) enthält.

4. Verfahren nach den vorstehenden Ansprüchen, wobei der genannte Verschmutzungsparameter durch den Cloud-Computerserver automatisch nach jeweils einer bestimmten Zeitspanne bestimmt wird.

5. Verfahren nach den vorstehenden Ansprüchen 1 bis 3, wobei der Verschmutzungsparameter auf Anforderung der Luftreinigungsvorrichtung (20) oder der Softwareanwendung durch den Cloud-Computerserver bestimmt wird.

6. Verfahren nach den vorstehenden Ansprüchen, wobei die genannten, vom Cloud-Computerserver (30) empfangenen Informationen durch Aufbau einer Drahtlosverbindung über das genannte Kommunikationsnetz und unter Einbeziehung einer IP-Adresse der Luftreinigungsvorrichtung (20) vom Kommunikationsmodul der Luftreinigungsvorrichtung (20) gesendet werden.

7. Verfahren nach den vorstehenden Ansprüchen 1 bis 5, wobei die genannten, vom Cloud-Computerserver (30) empfangenen Informationen durch Aufbau einer Drahtlosverbindung über das Kommunikationsnetz und unter Einbeziehung einer IP-Adresse des an die Luftreinigungsvorrichtung (20) angrenzenden Benutzerterminals (10) von der Softwareanwendung gesendet werden.

8. Verfahren nach Anspruch 1, ferner umfassend das Anzeigen der genannten Angabe auf einer Anzeige der Luftreinigungsvorrichtung (20).

9. Verfahren nach Anspruch 1, ferner umfassend das Übermitteln der genannten Angabe durch das Kommunikationsmodul an die Softwareanwendung und ferner das Anzeigen der Angabe auf einer Anzeige des Benutzerterminals (10).

10. Verfahren nach Anspruch 1, wobei die genannte Einstellung über eine zwischen dem Benutzerterminal (10) und dem Kommunikationsmodul der Luftreinigungsvorrichtung (20) erstellte Bluetooth-Verbindung erfolgt.

## Revendications

1. Une méthode pour contrôler à distance un dispositif de purification de l'air, la méthode comportant :
- le réglage, via une application de logiciel installée dans un terminal utilisateur (10), des paramètres de configuration initiale d'un dispositif de purification d'air (20) comportant au moins un élément de filtre et un module de communication pouvant être connecté à un serveur informatique en nuage (30) pour contrôler à distance le fonctionnement de ce dispositif de purification de l'air (20) ;
- la réception, par le serveur informatique en nuage (30), des informations sur la géolocalisation de ce dispositif de purification (20) ;
- la détermination, par le serveur informatique en nuage (30), d'un paramètre de pollution concernant cette géolocalisation en corrélant ces informations reçues avec un registre contenant des données de pollution sur des emplacements différents ;
- la comparaison, par le serveur informatique en nuage (30), de ce paramètre de pollution ayant un certain seuil ; et
- l'émission, par le serveur informatique en nuage (30), d'une première instruction de fonctionnement pour ce dispositif de purification d'air (20) dépendant d'un résultat de cette comparaison transmise au module de communication via un réseau de communications,
**caractérisé en ce que** la méthode comporte en plus :
- la réception, par le serveur informatique en nuage (30) soit du module de communication soit de l'application de logiciel, un enregistrement des heures de fonctionnement du dispositif de purification d'air (20) ;
- la détermination par le serveur informatique en nuage (30), d'un paramètre d'efficience de filtrage basé sur l'enregistrement reçu des heures de fonctionnement du dispositif de purification d'air (20) et les données historiques concernant l'emplacement particulier du dispositif de purification d'air (20) ; et
- l'émission, par le serveur informatique en nuage (30), dépendant du résultat de cette détermination, une deuxième instruction de fonctionnement pour le dispositif de purification d'air (20) en établissant une connexion sans fil avec ce module de communication, cette deuxième instruction de fonctionnement comportant une indication que cet au moins un élément filtre doit être remplacé.

2. La méthode de la revendication 1, dans laquelle le dispositif de purification d'air (20) est éteint, le paramètre de pollution est égal ou supérieur au seuil donné et cette première instruction de fonctionnement comporte une commande de mise sous tension pour allumer le dispositif de purification d'air (20).

3. La méthode de la revendication 1, dans laquelle le dispositif de purification d'air (20) est allumé, le paramètre de pollution est au-dessous du seuil donné et cette première instruction de fonctionnement comporte une commande de mise hors tension du dispositif de purification d'air (20).

4. La méthode des revendications précédentes, où ce paramètre de pollution est automatiquement déterminé par le serveur informatique en nuage chaque certain temps.

5. La méthode des revendications précédentes 1 à 3, comportant la détermination par le serveur informatique en nuage du paramètre de pollution à la demande du dispositif de purification d'air (20) ou de l'application de logiciel.

6. La méthode des revendications précédentes, où cette information reçue par le serveur informatique en nuage (30) est envoyée par le module de communication du dispositif de purification d'air (20) en établissant une connexion sans fil via ce réseau de communication et comprenant une adresse IP du dispositif de purification d'air (20).

7. La méthode des revendications précédentes 1 à 15, où ces informations reçues par le serveur informatique en nuage (30) sont envoyées par l'application de logiciel en établissant une connexion sans fil via le réseau de communications et comprenant une adresse IP du terminal utilisateur (10) étant adjacente au dispositif de purification d'air (20).

8. La méthode de la revendication 1, comportant également l'affichage de cette indication dans un écran du dispositif de purification d'air (20).

9. La méthode de la revendication 1, comportant également la communication, par le module de communication, de cette indication à l'application de logiciel et ensuite l'affichage de l'indication sur un 'écran du terminal utilisateur (10).

10. La méthode de la revendication 1, où ce réglage est fait via une communication Bluetooth établie entre le terminal utilisateur (10) et le module de communication du dispositif de purification d'air (20).
